# EUROPEAN PATENT SPECIFICATION

(11) **EP 0 810 702 B1**
(45) Date of publication and mention of the grant of the patent: **19.12.2001**
(21) Application number: 97107708.6
(22) Date of filing: 12.05.1997
(51) Int. Cl.: H02B 1/30, H02B 1/40, E05D 7/12

(54) **Improvement in the assembly of hinged front closing panels of metal cabinets for electric apparatuses**
Verbesserung an Montagesatz für schwenkbare Frontplatte in Metallschaltschränken
Amélioration au montage des panneaux de façade articulés des armoires électriques métalliques

(30) Priority: 30.05.1996 IT PN960025 U
(43) Date of publication of application: 03.12.1997
(73) Proprietor: Hager-Lumetal S.p.A., 33080 Porcia, Pordenone (IT)
(72) Inventor: Vendrametto, Maurizio, 33080 Porcia, Pordenone (IT); Dal Santo, Roberto, 33080 Roveredo in Piano, Pordenone (IT)
(74) Representative: Agostini, Agostino

(56) References cited:
- US-A- 5 088 155
- US-A- 5 193 308

## Description

### STATE OF THE ART

The present invention refers to a metal cabinet, in particular a cabinet for accomodating electric control and switching apparatuses, which is provided with at least a front closing panel arranged between two vertical stanchions.

It is a generally known and common practice to accomodate electric control and switching apparatuses, such as for instance those apparatuses needed in connection with power distribution systems in residential buildings or control and supervision systems associated to industrial plants, in metal cabinets made substantially in the shape of a parallelepipedon.

In order to entirely or partially mask, ie. screen, the electric apparatuses mounted in such cabinets, the latter are provided with either fixed or hinged front panels that extend between two vertical stanchions. The pins of a hinged panel are provided on a stationary portion of the same panel, which is fastened to one of said stanchions by means of screws. (See US-A- 5 088 155).

Such an assembly method used for the panels has however a major drawback in that it proves rather unpractical, since loosening the fastening screws may prove all too time-consuming or even awkward to carry out in the case that the personnel in charge of the apparatuses contained in the cabinet has to gain access to such apparatuses quite frequently for maintenance, repair or other emergency purposes.

A cabinet for electric apparatuses, provided along its two stanchions with a plurality of vertically aligned buttonhole-like slots adapted to accomodate just as many hinges obtained by punching and bending directly from the sheet-metal blank forming the closing panel, is described in FR-A-2 684 716. The therein disclosed solution, however, has substantially a drawback in that it does not allow for the direction of opening of said panel to be reversed and, anyway, it does not allow for the entire aperture span between the two stanchions of the cabinet to be fully closed vertically.

### PURPOSES OF THE INVENTION

It is a purpose of the present invention to provide a metal cabinet for electric apparatuses with a particularly simple, effective and low-cost system for the assembly of hinged front closing panels.

According to the invention, such an aim is reached in a cabinet provided with the characteristics and features as recited in the appended claims.

### SHORT DESCRIPTION OF THE ACCOMPANYING DRAWINGS

In order to enable the present invention to be more readily and clearly understood, a detailed description of a preferred embodiment thereof will be given below by way of non-limiting example with reference to the accompanying drawings, in which:
- Figure 1 is a perspective, overall view of a metal cabinet on which, for reasons of illustrative simplicity, a single front closing panel of the side-hinged type is shown to be mounted;
- Figure 2 is a perspective view from the interior of the cabinet, illustrating the innovatory part of the above cited front closing panel;
- Figures 3, 4, 5 and 6 are views illustrating, along the A-A- line of Figure 1, a sequence for the assembly of the same panel on a stanchion of the cabinet.

### DESCRIPTION OF THE INVENTION

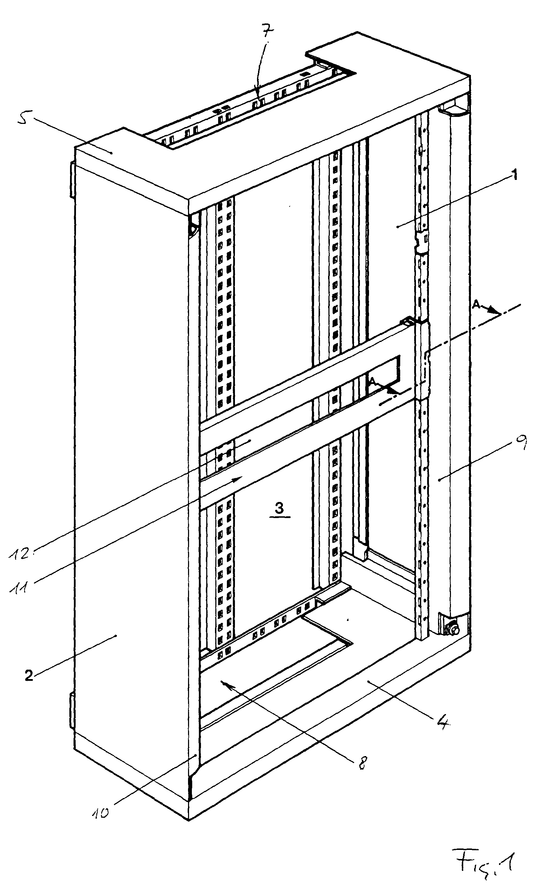

As shown in Figure 1, a cabinet adapted to contain electric control and switching apparatuses comprises a right-hand wall 1 and a left-hand wall 2, which are similar to one another, a back wall 3, a lower or bottom wall 4 and a top wall 5, which are similar to each other, too. All these walls are substantially formed by metal panels. Not shown in the Figure are a possible external door for closing the cabinet, the electric apparatuses mounted in the cabinet, the appropriate means provided to support such apparatuses inside the cabinet, and the cable-entry strain-relief flange located in a slot 7 punched in the top wall 5, since such items do not have any relevance to the purpose of the present invention.

It should also be noticed that if required, a cable-entry strain-relief flange may possibly be provided in a similar slot punched in the bottom wall 4 of the cabinet, instead of the shutting means shown at 8 in Figure 1.

At least a front closing panel is shown to extend, in order to more or less entirely cover or screen the electric apparatuses that are contained in the cabinet, between the stanchions 9 and 10, which are similar to each other (and which are formed out of the appropriately folded front edges of the side wallks 1 and 2 of the cabinet). For reasons of greater simplicity, only one of such closing panels, as provided with an aperture 12, is shown in the accompanying drawings at 11. The apparatuses (such as for instance contactor levers, indicator lights, actuating push-buttons, instrument dials and the like) mounted in the cabinet behind the closing panel 11 have in fact some parts that, duly isolated electrically from the other ones, protrude through said aperture 12.

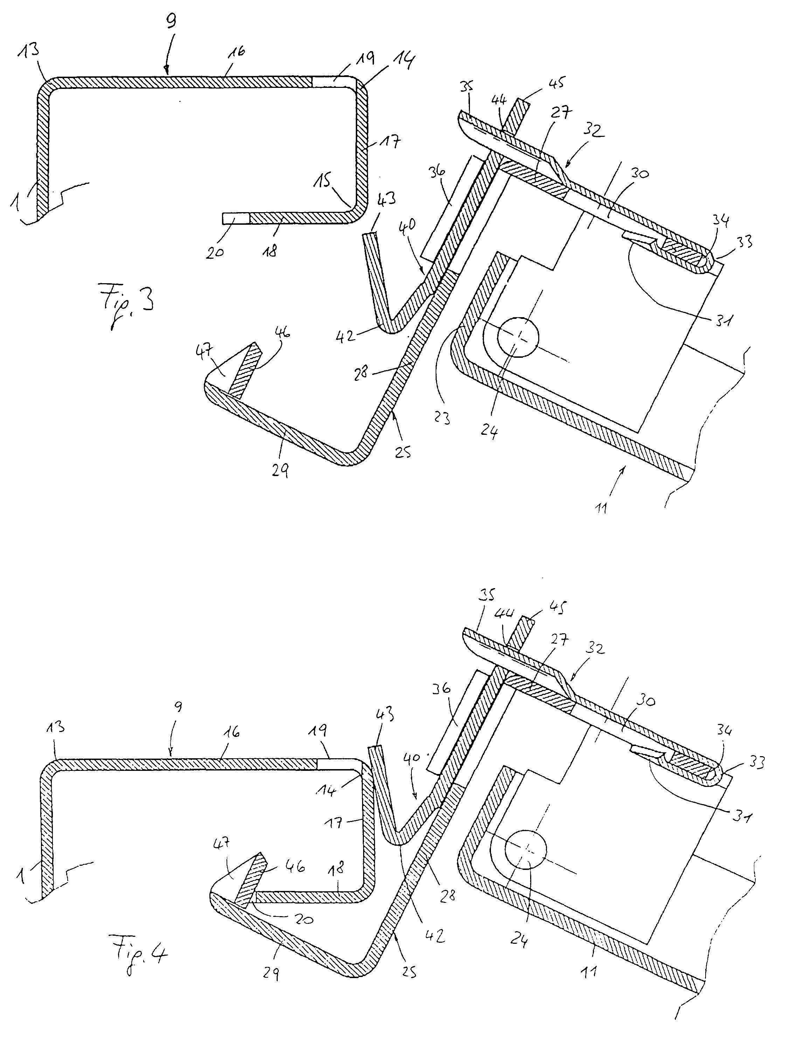

As this is best shown in the Figures 3 to 6, the stanchion 9 is obtained through three subsequent longitudinal foldings 13, 14 and 15 of the side wall 1 which define three vertical surfaces 16, 17 and 18 which are sequentially staggered by 90 degrees with respect to each other. A first surface 16 of the stanchion 9, ie. the most inner one, is provided close to the folding 14 with a sequence of elongated buttonhole-like slots 19 that are spaced with a fixed distance between their centers along the vertical. A second surface 17, which is contiguous to the first surface 16, is continuous, while along the free edge of a third surface 18 of the stanchion 9 there is provided a sequence of rectangular notches 20 which are also appropriately spaced with a fixed distance between their centers along the vertical.

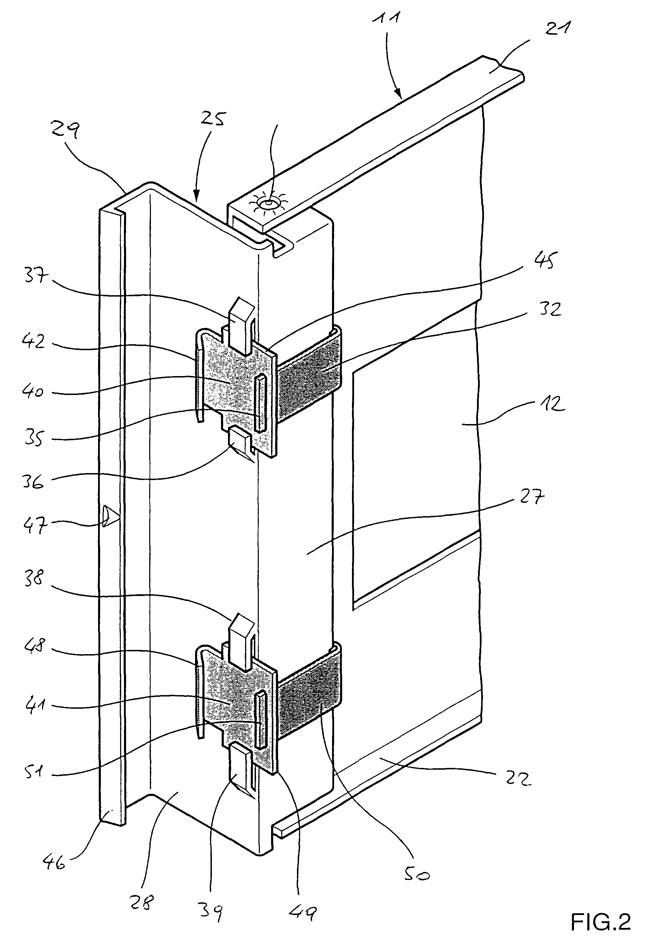

As this is best shown in Figure 2, a front closing panel 11 is formed by a single sheet-metal blank with its horizontal sides 21, 22 and its vertical sides (of which only the left-hand one 23 is to be seen in the illustrations appearing in Figure 3 to 6) folded in the shape of a L in order to obtain the desired rigidity. An end portion of the horizontal sides 21 and 22 is hinged, by means of two pins 24, on to the appendixes 26 of a section bar 25 which is preferably made of metal, too. Such a section bar 25 has a substantially Z-shaped cross-section since it is formed by a first side 27, a second contiguous and substantially perpendicular side 28, and a third side 29 extending parallelly to said first side 27. On the first side 27 of the section bar 25 there are provided two rectangular, parallel and vertically spaced slits. Only one of said slits, ie. the one referred to at 30, can be seen in the illustrations appearing in Figure 3 to 6. Said slit 30 is engaged by a first end portion 31 of an elastic foil 32 which, thanks to a tight, sharp folding 33 provided close to said first end portion 31, clamps around the free edge 34 and is therefore fastened to the section bar 25. A similar elastic foil 50 is provided and clamped, in a lower position, to the section bar 25 in the same manner as the foil 32 (see Figure 2).

On the second side 28 of the section bar 25, in correspondence of the elastic foils 32 and 50, there are provided some folds which are referred to at 36, 37 and 38, 39, respectively. Such folds constitute the runners, or guides, for two appropriately shaped metal plates 40 and 41 to slide therein along the second side 28 of the section bar 25. The plate 40 has a V-shaped fold 42 near a first end portion 43 thereof and, near the other end portion 45 thereof, a vertical slit 44 in which the other end portion 35 of the elastic foil 32 is retained with an adequate slack (see Figures 2 to 6).

Similarly, the other appropriately shaped plate 41 has a V-shaped fold 48 and, near the other end portion 49, a vertical slit (not shown in Figure 2) in which the corresponding end portion 51 of the second elastic foil 50 is retained with an adequate slack. Finally, the section bar 25 has, at the top of its third side 29, an orthogonal tab 46 adapted to link up as a hook with the surface 18 of the stanchion 9, as this will be explained further on. On the tab 46 there is provided at least an protrusion or chamfer cut 47, directly punched in the sheet-metal part, as a self-centering means for the closing panel 11 on the stanchion 9.

### ASSEMBLY SEQUENCE FOR THE ATTACHMENT OF A CLOSING PANEL

The sequence of the phases needed to mount on the stanchion 9 of the cabinet a front panel 11 that has been previously assembled to the section bar will be described below. It will of course be appreciated that the described phases are the same needed to also mount the panel 11 on the other stanchion 10 of the cabinet in the case that the opening direction of the same panel has to be reversed. Furthermore, although the detailed description is referring to the shaped plate 40 and the elastic foil 32, it shall be intended as extending to implicitly include also the plate 41 and the elastic foil 50.

Figure 3 illustrates the panel 11 being approached to the stanchion 9 and it can be noticed how the plate 40 is held by the elastic foil 32 oriented towards the second side 28 of the section bar 25. Figure 4 on the contrary illustrates how, when the panel is eventually approached, the terminal tab 46 of the section bar 25 has moved into, ie. is located "inside" the stanchion 9. In other words, the protrusion 47 gets hooked on to rectangular notches 20 that are provided along the free edge of the surface 18 of the stanchion 9, while the end portion 43 of the plate 40 is brought into contact with the surface 17 that is adjacent to the afore mentioned surface 16 of the stanchion 9.

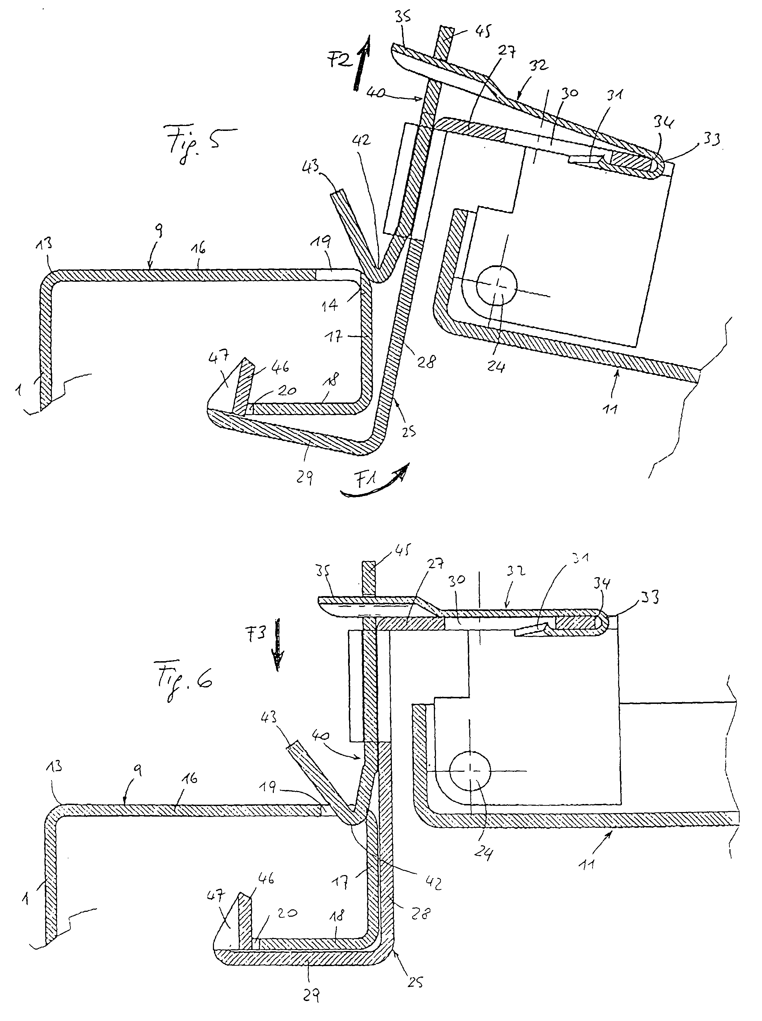

At this point of the assembly procedure, the fitter rotates, as this is best shown in Figure 5, the section bar 25 in the direction of the arrow F1 by using the contact between the terminal tab 46 and the free edge of the end surface 18 of the stanchion 9 as a lever, said section bar being here retained in its position by the protrusion 47 engaging the notch 20. As a result, the end portion 43 of the plate 40 is able to slide on the adjacent surface 17, in the direction shown by the arrow F2, thereby elastically deforming the foil 32 which therefore inflects, although it remains linked to the first side 27 of the section bar 25.

Such a sliding goes on until the V-shaped fold 42 of the plate 40, after having moved beyond the folding 16 of the stanchion 9, ends up by engaging the corresponding buttonhole-like slot 19 provided in the surface 16, as this is shown in Figure 6. Such a link-up is brought about by the reaction of the elastic foil 32 which, in regaining its original configuration, forces the plate 40 to slide along the second side 28 of the section bar 25 in the direction shown by the arrow F3. At the same time, the tab 46 completes its link-up with the free edge of the third side 29 of the section bar 25.

The ultimate result of all these assembly phases is that the section bar 25 and, as a consequence, the front panel 11 turn out to be attached to the stanchion 9 in a stable manner. It therefore ensues that the second side 28 of the section bar 25 is aligned with the surface 18 and the third side 29 of the same section bar 25 is aligned with the surface 16 of the stanchion 9 (see Figure 6).

It therefore clearly appears that the present invention is a sensible improvement in the methods used to fit front hinged panels on to metal cabinets, since it enables the related opereations to be completed in a much shorter time without the use of any normally used fastening means.

A further advantage of the present invention derives from the possibility for the front panel 11 to be most quickly removed whenever this is necessary (for instance, to maintenance or repair purposes). In this case, in fact, all it takes is disengaging the end portion 31 of the elastic foil 32 from the first side 27 of the section bar 25, so that the plate 40 can be released fron its link-up with the surface 16 of the stanchion 9, and subsequently carrying out the other above described phases in the opposite sequence.

## Claims

1. Metal cabinet, adapted in particular to accomodate electric control and switching apparatuses, comprising at least a front closing panel (11) hinged on at least a section bar (25) attached to a vertical stanchion (9) of the cabinet, **characterized in that** linked up with said section bar (25) there are elastic means (32, 50) that co-operate with at least a shaped element (40) which is mounted slidably on the same section bar, said shaped element (40) being adapted to engage, by snap-fitting into it, a corresponding buttonhole-like slot (19) provided on said stanchion (9), when sliding against the reaction of said elastic means (32, 50) due to the pushing action brought about by the same shaped element (40) coming into contact with the same stanchion (9).

2. Metal cabinet according to claim 1, **characterized in that** said section bar (25) comprises two contiguous, substantially perpendicular sides (27, 28), the first such side (27) being linked up with said elastic means (32, 50) and the second such side (28) forming the sliding path for said shaped element (40).

3. Metal cabinet according to claim 2, **characterized in that** the shaped element (40) is guided, during its sliding, by two parallel guides (36, 37) provided on said second side (28) of the section bar (25).

4. Metal cabinet according to claim 1, **characterized in that** the shaped element (40) is formed by a metal plate having, near an end portion (43) thereof, a substantially V-shaped fold (42) adapted to engage said buttonhole-like slot (19) of the stanchion (9).

5. Metal cabinet according to claim 1, **characterized in that** each elastic means (32) comprises an elastically deformable foil of which some portions (31, 33) are adapted to link it up with said first side (27) of the section bar (25), while other portions (35) are adapted to link it up with said shaped element (40).

6. Metal cabinet according to claim 2, **characterized in that** said section bar (25) also comprises a third side (29), which is contiguous to said second side (28) and is provided with a tab (46) adapted to link up with the free edge of said stanchion (9), said tab (46) being further provided with at least a centering protrusion or chamfer cut (47) adapted to hook up on to a corresponding notch (20) provided on the same free edge.

## Patentansprüche

1. Metallschrank, der insbesondere für die Aufnahme elektrischer Kontroll- und Schaltvorrichtungen vorgesehen ist und wenigstens eine vordere Verschlussplatte (1) umfasst, die wenigstens an einer Profilschiene (25) gelenkig gelagert ist, die an einer vertikalen Strebe (9) des Schrankes angebracht ist, **dadurch gekennzeichnet, dass** mit der Profilschiene (25) elastische Einrichtungen (32,50) verbunden sind, die wenigstens mit einem geformten Element (40) zusammenwirken, das verschiebbar an der Profilschiene angebracht ist, wobei das geformte Element (40) durch Einschnappen in einen entsprechenden knopflochartigen Schlitz (19), der an der Strebe (9) vorhanden ist, mit diesem in Eingriff kommt, wenn es gegen die Gegenwirkungskraft der elastischen Einrichtungen (32,50) aufgrund der Schiebewirkung gleitet, die dadurch erzeugt wird, dass das geformte Element (40) mit der Strebe (9) in Kontakt kommt.

2. Metallschrank nach Anspruch 1, **dadurch gekennzeichnet, dass** die Profilschiene (25) zwei aneinandergrenzende, im Wesentlichen senkrecht zueinander angeordnete Seiten (27,28) umfasst, wobei die erste dieser Seiten (27) mit der elastischen Einrichtung (32,50) verbunden ist und die zweite dieser Seiten (28) den Gleitweg für das geformte Element (40) bildet.

3. Metallschrank nach Anspruch 2, **dadurch gekennzeichnet, dass** das geformte Element (40) bei seiner Gleitbewegung durch zwei parallele Führungen (36,37) geführt wird, die an der zweiten Seite (28) der Profilschiene (25) vorhanden sind.

4. Metallschrank nach Anspruch 1, **dadurch gekennzeichnet, dass** das geformte Element (40) durch eine Metallplatte gebildet wird, die in der Nähe eines Endabschnitts (43) derselben einen im Wesentlichen V-förmigen Knick (42) aufweist, der in den knopflochartigen Schlitz (19) der Strebe (9) eingreift.

5. Metallschrank nach Anspruch 1, **dadurch gekennzeichnet, dass** jede elastische Einrichtung (32) eine elastisch verformbare Folie umfasst, wobei einige Abschnitte (31,33) derselben mit der ersten Seite (27) der Profilschiene (25) verbunden werden, während andere Abschnitte (35) mit dem geformten Element (40) verbunden werden.

6. Metallschrank nach Anspruch 2, **dadurch gekennzeichnet, dass** die Profilschiene (25) des Weiteren eine dritte Seite (29) umfasst, die an die zweite Seite (28) angrenzt und mit einer Zunge (46) versehen ist, die mit der freien Kante der Strebe (9) in Verbindung kommt, wobei die Zunge (46) des Weiteren mit wenigstens einem Zentriervorsprung bzw. Schrägschnitt (47) versehen ist, der an einer entsprechenden Einkerbung (20) einhakt, die an der freien Kante vorhanden ist.

## Revendications

1. Armoire métallique, adaptée en particulier pour recevoir des appareillages électriques de commande et de commutation, comprenant au moins un panneau de fermeture avant **(11)** articulé sur au moins une barre profilée **(25)** fixée à un montant vertical **(9)** de l'armoire, **caractérisée en ce qu'**à ladite barre profilée **(25)** sont reliés des moyens élastiques **(32, 50)** qui coopèrent avec au moins un élément façonné **(40)** qui est monté coulissant sur la même barre profilée, ledit élément façonné **(40)** étant adapté pour se mettre en prise par encliquetage dans une fente correspondante **(19),** de type boutonnière, prévue sur ledit montant **(9),** lors d'un coulissement contre la réaction desdits moyens élastiques **(32, 50),** sous l'effet de l'action de poussée provoquée par le même élément façonné **(40)** venant en contact avec le même montant **(9).**

2. Armoire métallique selon la revendication 1, **caractérisée en ce que** ladite barre profilée **(25)** comprend deux faces contiguës sensiblement perpendiculaires **(27, 28),** la première **(27)** de ces faces étant reliée auxdits moyens élastiques **(32, 50)** et la deuxième **(28)** de ces faces formant la trajectoire de glissement pour ledit élément façonné **(40).**

3. Armoire métallique selon la revendication 2, **caractérisée en ce que** l'élément façonné **(40)** est guidé, durant son coulissement, par deux guides parallèles **(36, 37),** prévus sur ladite deuxième face **(28)** de la barre profilée **(25).**

4. Armoire métallique selon la revendication 1, **caractérisée en ce que** l'élément façonné **(40)** est formé par une plaque métallique ayant, près d'une partie d'extrémité **(43),** une pliure sensiblement en V **(42),** adaptée pour se mettre en prise dans ladite fente **(19)** de type boutonnière du montant **(9).**

5. Armoire métallique selon la revendication 1, **caractérisée en ce que** chaque moyen élastique **(32)** comprend une feuille déformable élastiquement, dont certaines parties **(31, 33)** sont adaptées pour se lier à ladite première face **(27)** de la barre profilée **(25),** tandis que d'autres parties **(35)** sont adaptées pour se lier audit élément façonné **(40).**

6. Armoire métallique selon la revendication 2, **caractérisée en ce que** ladite barre profilée **(25)** comprend également une troisième face **(29),** qui est contiguë de ladite deuxième face **(28)** et est munie d'une patte **(46),** adaptée pour se lier au bord libre dudit montant **(9),** ladite patte **(46)** étant munie, de plus, d'au moins une saillie de centrage, ou découpe en chanfrein **(47),** adaptée pour s'accrocher sur une encoche correspondante **(20)** prévue sur le même bord libre.
